# EUROPÄISCHE PATENTANMELDUNG

(11) **EP 2 420 536 A1**
(43) Veröffentlichungstag der Anmeldung: **22.02.2012**
(21) Anmeldenummer: 11165930.6
(22) Anmeldetag: 22.09.2008
(51) Int. Cl.: C08L 23/00, E06B 3/663, C08L 23/02, C08L 53/00, C08L 53/02

(54) **Randverbund zur Herstellung von Zwei- oder Mehrscheiben-Isolierglas oder Solarmodulen**

(30) Priorität: 20.09.2007 DE 102007045104
(62) Teilanmeldung aus: 08831587.4
(71) Anmelder: Kömmerling Chemische Fabrik GmbH, 66954 Pirmasens (DE)
(72) Erfinder: Becker, Harald, 67705, Stelzenberg (DE); Brücher, Heike, 66887, Rathsweiler (DE); Schott, Norbert, 66482, Zweibrücken (DE)
(74) Vertreter: Wieske, Thilo

(57) **Zusammenfassung**

Die vorliegende Erfindung betrifft einen Randverbund zur Herstellung von Zwei- oder Mehrscheiben-Isolierglas oder Solarmodulen, wobei ein Primärdichtstoff und ein Sekundärdichtstoff vorgesehen sind.

Um eine Dichtmasse zu schaffen, mit der auch unter hohen Belastungen eine dauerhafte Stabilität des Randverbundes erreichbar ist, wird im Rahmen der Erfindung vorgeschlagen, daß der Primär-Dichtstoff ein mit speziellen reaktiven Gruppen modifiziertes Polymer enthält und insgesamt folgendermaßen aufgebaut ist:
a) 30 - 60 Gew.-%, vorzugsweise 40 bis 50 Gew.%, olefinische Polymere, Mn 400 - 600.000 D, vorzugsweise von 5.000 bis 300.000 D
b) 2 -35 Gew.-%, vorzugsweise 5-25 Gew.-%, modifiziertes Polymer
c) 5-40 Gew.-%, vorzugsweise 10 bis 30 Gew.-%, feinteilige, inerte Füllstoffe
d) 5-25 Gew.-%, vorzugsweise 10 bis 15 Gew.-%, wasserbindende Stoffe
e) 0 - 3 Gew.-% Alterungsschutzmittel, insbesondere Antioxidantien oder UV-Schutzmittel,

und der Sekundär-Dichtstoff ein Dichtstoff auf Silikon-Basis ist.

Es ergibt sich hierbei ein Verbund aus der Dichtungsmasse der Silikon-Sekundär-Versiegelung, der gegenüber äußeren Einflüssen (z.B. Weichmacher-Migration aus unverträglichen Materialien) selbst bei hohen Temperaturen bzw. Temperatur-Wechsel-Beanspruchungen wesentlich stabiler ist.

## Beschreibung

Die vorliegende Erfindung betrifft einen Randverbund zur Herstellung von Zwei- oder Mehrscheiben-Isolierglas oder Solarmodulen, wobei ein Primärdichtstoff und ein Sekundärdichtstoff vorgesehen sind.

Der Aufbau von Isolierglaseinheiten aus zwei oder mehreren Glasscheiben ist bekannt. Üblicherweise werden dazu neben den Glasscheiben als sogenannter Randverbund noch Dicht- und/oder Klebstoffe und Abstandhalter sowie Trockenmittel eingesetzt. Der Aufbau der Verglasung von Solarmodulen (sowohl Photovoltaiksolarmodulen als auch Solarmodulen zur Warmwassererzeugung) ist entsprechend, wobei die beiden Glasscheiben auch teilweise oder ganz durch Metallbleche und/oder Kunststofffolien ersetzt sein können.

Der Abstandhalter besteht überwiegend aus Metall (in der Regel Aluminium), ist im Randbereich der Glasscheiben platziert und hat die Aufgabe, den gewünschten Abstand zwischen den Glasscheiben herzustellen. Zusätzlich ist im Inneren des hohl ausgeführten Abstandhalters ein Trockenmittel (z.B. ein Molekularsieb) enthalten, um das im Scheibenzwischenraum eingeschlossene Luft- oder Gasvolumen trocken zu halten. Damit eine Feuchtigkeitsaufnahme des Trockenmittels überhaupt erfolgen kann, ist die dem Scheibenzwischenraum zugewandte Seite des Abstandhalters mit kleinen Öffnungen (Längsperforation) versehen. Dadurch wird verhindert, daß sich an den Innenseiten der Glasscheiben bei niedrigen Umgebungstemperaturen Feuchtigkeit kondensiert und es dadurch zu optischen Beeinträchtigungen kommt.

Zwischen den den Glasscheiben zugewandten Seiten des Abstandhalters und den inneren Flächen der Glasscheiben befindet sich eine sogenannte Primärdichtung auf Basis von Polyisobutylen und/oder Butyl-Kautschuk. Die Aufgabe der Primärdichtung ist
a) während der Herstellung der Isolierglasscheiben eine Art von "Montagehilfe" beim Zusammenfügen der Glasscheiben mit dem mit der Primärdichtung vorbeschichteten Abstandhalter zu sein, um diesen Verbund für die nächsten Schritte im Herstellprozeß zusammenzuhalten und
b) später während der "Lebensdauer" der Isolierglaseinheit eine Wasserdampfsperre für von außen nach innen in den Scheibenzwischenraum eindringende Feuchtigkeit zu bilden und im Falle von gasgefüllten Einheiten einen Verlust des Füllgases aus dem Scheibenzwischenraum nach außen zu verhindern.

Da die umlaufend nach außen gerichtete Kante des Abstandhalters gegen die Außenkanten der Glasscheiben um einige Millimeter zurückversetzt ist, bildet sich eine "Rinne". In diesen Freiraum wird die sogenannte Sekundär-Dichtung eingespritzt, welche in erster Linie die Aufgabe hat, den Rand der Isolierglaseinheit (Glasscheiben und Abstandhalter) elastisch zu verkleben und ebenfalls in einem gewissen Maß zusätzlich eine Dichtung gegen Wasser/Wasserdampf von außen und Gas von innen (Scheibenzwischenraum) zu bilden. Die Sekundär-Dichtung besteht in der Regel aus bei Raumtemperatur vernetzenden ZweiKomponenten-Dicht- bzw. -Klebstoffen auf Basis von Polysulfid-, Polyurethan- oder Silikon. Einkomponentige Systeme, wie z.B. auf Basis von Silikon oder einem heiß applizierten Butyl-Schmelzklebstoff, sind auch möglich.

Die oben beschriebenen Systeme weisen aber auch gewisse Nachteile auf. Bezüglich des Herstellverfahrens der Isolierglasscheiben müssen eine Vielzahl von Materialien in einer Reihe von teilweise parallel ablaufenden komplizierten und kostenintensiven Arbeitschritten verarbeitet werden.

Bezüglich der Wärme-Isolationseigenschaften des Randverbundes haben dort verwendete Abstandhalter aus Metall den Nachteil, eine hohe Wärmeleitfähigkeit zu besitzen und dadurch den wünschenswert niedrigen k-Wert einer Isolierglasscheibe, der bei Doppel- oder Mehrfach-Isolierglasscheiben durch Edelgasfüllung des Scheibenzwischenraums und Verwendung von mit sog. Low-ε-Schichten beschichteten Glasscheiben in den letzten Jahren deutlich verbessert werden konnte, negativ zu beeinflussen.

Besonders aus dem zweiten Nachteil heraus sind in letzter Zeit vermehrt Isolierglas-Systeme auf den Markt gekommen, die anstelle von Aluminium als Abstandhalter zurückgreifen auf:
a) vorgefertigte Profile aus Edelstahl (geringere Wandstärke möglich, dadurch niedrigerer Wärmefluß) oder
b) vorgefertigte Profile aus Kunststoff oder
c) vorgefertigte thermoplastische Profile oder
d) aus unmittelbar auf eine der Glasscheiben direkt aufextrudiertem Material aus thermoplastischen Materialien

Diese Systeme bezeichnet man aufgrund der verbesserten Wärmedämm-Eigenschaften im Randverbund auch als "warm-edge-Systeme".

Beispiele für c) findet man bei EP 517 067 A2, Beispiele und Applikationsmaschinen für d) findet man bei EP 714 964 A1, EP 176 388 A1 und EP 823 531 A2.

Aus der DE 196 24 236 A1 ist eine Schmelzklebstoff-Zusammensetzung für Isolierglas, enthaltend eine Mischung aus mindestens einem reaktiven Bindemittel auf der Basis von silanfunktionellem Polyisobutylen, hydriertem Polybutadien und/oder Poly-α-olefinen und einem nichtreaktiven Bindemittel aus der Gruppe der Butylkautschuke, Poly-α-olefine, Dienpolymere, Polybutene oder Styrol-Blockcopolymere bekannt, die als 1- oder 2-Komponenten-Kleb-/Dichtstoff zur Herstellung von Isoliergläsern verwendet werden kann. Hierbei werden keine separaten Abstandhalter aus Metall- oder Kunststoffprofilen und keine weiteren Sekundär-Dichtstoffe benötigt.

Die DE 198 21 355 A1 beschreibt eine Dichtungsmasse zur Herstellung von Mehrscheibenisolierglas, die silanmodifizierten Butylkautschuk enthält und als Abstandhalter zwischen den Glastafeln des Mehrscheibenisolierglases dient und ebenfalls keinen Sekundär-Dichtstoff benötigt.

Besonders die direkt auf eine der Glasscheiben auf extrudierten Abstandhalter beseitigen auch die Nachteile bezüglich des Herstellprozesses und es ist eine wesentlich flexiblere und produktivere automatisch ablaufende Herstellung von Isolierglasscheiben möglich geworden.

Auch im Bereich der Herstellung von Solarmodulen hat sich gezeigt, dass eine solche Art und Weise, den Abstandhalter direkt auf die Modulkanten aufzutragen, viele Vorteile hat. Gegenüber z.B. dem manuellen oder halbautomatischen Auflegen von vorextrudierten Butylbändern ergeben sich nicht nur optische Vorteile, sondern auch produktivitäts- und für die langlebige Wasserdampf und Gasdichtheit funktionssicherheitsrelevante Vorteile. In EP 1 615 272 A1 (oder DE 10 2004 032 604 A1) sind beispielhaft ein Verfahren und eine Vorrichtung zum Zusammenbau von Solarzellenmodulen beschrieben.

Das verwendete thermoplastische Material vereint sowohl die Funktion des Abstandhalters als auch die der sogenannten Primär-Dichtung miteinander und enthält auch das Trockenmittel. Ein Beispiel dafür ist das sogenannte TPS-System (TPS = Thermoplastic spacer).

Auch bei diesen Systemen ist die umlaufend nach außen gerichtete Kante des Abstandhalters gegen die Außenkanten der Glasscheiben um einige Millimeter zurückversetzt und der verbleibende Freiraum ist mit der sogenannten Sekundär-Dichtung gefüllt, welche die Einheiten elastisch verklebt.

Im Falle von Silikon als Sekundär-Dichtung hat sich gezeigt, daß sich in Verbindung mit einem thermoplastischen Abstandhalter, z.B. dem TPS-System, wesentlich sicherer auch mit Edelgas gefüllte Elemente herstellen lassen, die auch nach längeren Bewitterungszyklen ihre Gasdichtheit im Randverbund behalten (EP 916 801 A2). Entsprechend gute Gasleckraten lassen sich nur sehr schwer mit metallischen Abstandhaltern in Verbindung mit üblicher Primär-Dichtung und Sekundär-Dichtung auf Basis von Silikonen erreichen.

Das TPS-Sytem hat sich in den letzten 10 Jahren in Verbindung mit Polysulfid als Sekundär-Dichtstoff und in der Anwendung Isolierglas im Fensterbau ohne jegliche Probleme bewährt. Speziell im Fall von Silikon als Sekundär-Dichtung besteht allerdings ein Nachteil, der sich in bestimmten Fällen auswirken kann und sich in einem optischen Mangel innerhalb der Isolierglas-Einheiten zeigt. Bei der Kombination von:
a) durch den äußeren Einfluß zum Isolierglas-Randverbund unverträglichen Materialien (z.B. Wetterfugen-Dichtung, EPDM-Verglasungsprofilen, etc.) und
b) durch mangelhafte Planung vorgegebene Konstruktionsfehler im Verglasungsbereich der Isolierglaselemente (schlechte Belüftung/Entwässerung des Glasfalzes) und
c) durch besonders exponierte Einbausituationen (besonders hohe Temperaturen an der Isolierglasscheibe bzw. im Randverbund)

kann es zur Verformung bzw. Wanderung des thermoplastischen Abstandhalterprofils in den Scheibenzwischenraum kommen. Dieses Phänomen wird auch als "Girlanden-Effekt" bezeichnet, wobei es je nach Qualität des eingesetzten TPS-Dichtstoffs (Rezeptur/Herstellverfahren) deutliche Unterschiede in der Anfälligkeit gegenüber den unter Punkt a) bis c) beschriebenen äußeren Einflüssen gibt. Als wesentliche Ursachen dafür kann die bei Silikonen als Sekundär-Dichtung fehlende Haftung zwischen TPS-Dichtstoff und der Sekundärdichtung sowie die nur auf überwiegend physikalischen Wechselwirkungen basierende Haftung des TPS-Dichtstoffs zum Glas, welche leicht durch in die Grenzfläche zwischen Glas und TPS-Dichtstoff migrierende Stoffe mehr oder weniger stark geschwächt werden kann, angenommen werden.

Vorschläge, eine Verbindung zwischen TPS und Sekundär-Dichtung aus Silikon derart herzustellen, daß eine mechanische Verankerung bzw. Kraftschluß durch besonders ausgeführte Formen des extrudierten Profilquerschnitts des TPS-Abstandhalters erreicht wird (DE 102 04 174 A1), scheitern leider an der nicht zu realisierenden Düsenform, um einen solchen Profil-Querschnitt zu extrudieren. Bei diesem Vorschlag ebenfalls ungelöst ist die genaue Bewerkstelligung des Verschlusses, d. h. der Übergang zwischen Anfang und Ende des auf die Glasscheibe extrudierten Abstandhalterprofils, wie es für einen normalen rechteckigen Querschnitt in EP 823 531 A2 beschrieben und gelöst ist. Eine weitere Schwierigkeit bei diesem Vorschlag besteht darin, in die zum Teil konvexen Hohlräume innerhalb des TPS-Strangs den Sekundärdichtstoff ohne Lufteinschlüsse vollständig zu applizieren. Insgesamt ist dies also ein Vorschlag, der sich in der alltäglichen Produktionspraxis so nicht durchführen läßt und damit auch nicht zum gewünschten Ziel führt.

Versuche, durch gezielte Zugabe von klassischen Silan-basierenden Haftvermittlern entweder im TPS-Dichtstoff oder/und im Silikon-Dichtstoff mit dem Ziel, eine chemische Haftung zwischen beiden Dichtstoffen zu erreichen, schlagen ebenfalls fehl. Man muß dafür Typen und Mengen einsetzen, die leider andere gewünschte Eigenschaften, wie z.B. die Verarbeitungsviskosität des TPS-Dichtstoffes negativ beeinflussen oder später in der verbauten Situation im Isolierglas ein sogenanntes Fogging erzeugen.

Aufgabe der Erfindung ist es, einen Randverbund zu schaffen, der nicht die geschilderten Nachteile aufweist und insbesondere auch unter hohen Belastungen (äußere Einflüsse durch unverträgliche Materialien, extrem hohe Temperaturen und LTV-Bestrahlung) dauerhafte Stabilität des TPS-Randverbundes und dadurch die Verformung bzw. Wanderung des thermoplastischen Abstandhalterprofils in den Scheibenzwischenraum sicher zu verhindern.

Die Aufgabe wird durch eine Randverbund gelöst, daß der Primär-Dichtstoff ein mit speziellen reaktiven Gruppen modifiziertes Polymer enthält und insgesamt folgendermaßen aufgebaut ist:
a) 30 - 60 Gew.-%, vorzugsweise 40 bis 50 Gew.%, olefinische Polymere, Mn 400 - 600.000 D, vorzugsweise von 5.000 bis 300.000 D
b) 2 -35 Gew.-%, vorzugsweise 5-25 Gew.-%, modifiziertes Polymer
c) 5-40 Gew.-%, vorzugsweise 10 bis 30 Gew.-%, feinteilige, inerte Füllstoffe
d) 5-25 Gew.-%, vorzugsweise 10 bis 15 Gew.-%, wasserbindende Stoffe
e) 0 - 3 Gew.-% Alterungsschutzmittel, insbesondere Antioxidantien oder UV-Schutzmittel,
und der Sekundär-Dichtstoff ein Dichtstoff auf Silikon-Basis ist.

Bedingt durch den Anteil der an einen Teil der Polymerzusammensetzung gebundenen reaktiven Gruppen des Primär-Dichtstoffs wird die Haftung zu anderen Werkstoffen, insbesondere Glas, Metallen und Kunststoff, bei der erfindungsgemäßen Dichtmasse im Vergleich zum Stand der Technik deutlich verbessert. Neben rein physikalischen Wechselwirkungen, die beim Stand der Technik die Grundlagen zur Glashaftung sind, kommen bei der Erfindung der Aufbau von chemischen Bindungen über Hydrolyse-Kondensationsreaktionen zwischen den modifizierten Polymerbestandteilen und den chemisch aktiven Gruppen (-Z-OH) der Substratoberfläche hinzu. Im Falle von Silikon als Sekundär-Dichtstoff verbindet sich aber auch zusätzlich durch Quervernetzung an der Grenzfläche zwischen der Dichtungsmasse und dem Silikon-Dichtstoff während dessen Aushärtung beide Dichtstoffe chemisch miteinander. Es entsteht dadurch ein Verbund aus TPS-Dichtstoff und Silikon-Sekundär-Versiegelung, der gegenüber äußeren Einflüssen (z.B.Weichmacher-Migration aus unverträglichen Materialien) selbst bei hohen Temperaturen bzw. Temperatur-Wechsel-Beanspruchungen wesentlich stabiler ist und somit jegliche Girlandenbildung ausgeschlossen ist.

Eine Ausgestaltung der Erfindung besteht darin, daß die olefinischen Polymere aus der Gruppe bestehend aus Polyisobutylen, Polybuten, Butyl-Kautschuk (Polyisobutylen-isopren), Styrol-Block-Copolymeren, insbesondere SBS, SIS, SEBS, SEPS, SIBS, SPIBS, auch in modifizierter Form und amorphe Co- und/oder Terpolymere von α-Olefinen (APAO) ausgewählt sind.

Im Rahmen der Erfindung ist vorgesehen, daß das modifizierte Polymer ausgewählt ist aus der Gruppe bestehend aus Polyisobutylen, Polybuten, Butyl-Kautschuk (Polyisobutylen-isopren), Styrol-Block-Copolymeren, insbesondere SBS, SIS, SEBS, SEPS, SIBS, SPIBS, auch in modifizierter Form und amorphe Co- und/oder Terpolymere von α-Olefinen (APAO), wobei das Polymer modifiziert ist mit mindestens einer endständigen oder innerhalb der Kette statistisch verteilten Gruppe der Formel (1) 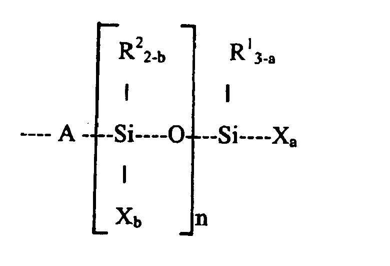 wobei - A -
- (CH₂)ₘ- (2),
- S-(CH₂)ₘ- (3) oder 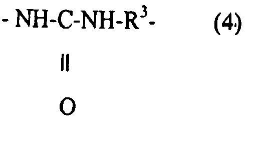 ist und R¹ und R² gleich oder verschieden sind und eine Alkylgruppe mit 1 bis 20 Kohlenstoffatomen, eine Arylgruppe mit 6 bis 20 Kohlenstoffatomen oder eine Aralkylgruppe mit 7 bis 20 Kohlenstoffatomen sind,
   X eine Hydroxylgruppe oder eine hydrolisierbare Gruppe ist,
   a 0,1,2 oder 3 und b 0,1 oder 2 ist, wobei die Summe von a und b größer/gleich 1 ist und n eine ganze Zahl zwischen 0 und 18 ist, m eine ganze Zahl zwischen 0 und 4 ist und R³ 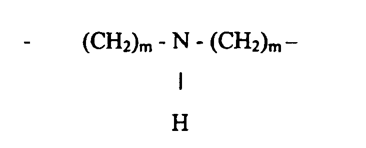
ist.

Weiterhin liegt es im Rahmen der Erfindung, daß die Füllstoffe ausgewählt sind aus der Gruppe bestehend aus den gemahlenen und gefällten Kreiden, Silikaten, Siliziumoxiden und Rußen.

In diesem Zusammenhang ist auch erfindungsgemäß vorgesehen, daß die Kreiden oberflächenbehandelt sind.

Es können jedoch auch nicht oberflächenbehandelte Kreiden eingesetzt werden.

Ebenso ist erfindungsgemäß vorgesehen, daß die Silikate ausgewählt sind aus der Gruppe bestehend aus Talkum, Kaolin, Glimmer, Siliziumoxiden, Kieselsäuren und Kalzium- oder Magnesium-Silikaten.

Zur Erfindung gehörig ist auch, daß die wasserbindenden Stoffe ausgewählt sind aus Molekularsieben (Zeolithen) vom Typ 3A bis 10A.

Selbstverständlich können auch andere chemisch oder physikalisch Wasser bindende Stoffe verwendet werden.

Es ist sowohl möglich, die Dichtungsmasse als Einkomponenten-Dichtungsmasse oder als Zweikomponenten-Dichtungsmasse auszuführen. Bei der Ausführungsform als Einkomponenten-Dichtungsmasse werden im Herstellungsprozeß alle Komponenten miteinander gemischt. Bei der zweikomponentigen Ausführung werden z.B. in einer Komponente A die olefinischen Polymere (a) zusammen mit einem Teil der feinteiligen, inerten Füllstoffe (c) und den wasserbindenden Füllstoffen (d) gemischt; eine zweite Komponente B aus einem Teil der feinteiligen, inerten Füllstoffe zusammen mit einem Teil der olefinischen Polymere (a) und/oder der Gesamtmenge der modifizierten Polymere (b) und der Alterungsschutzmittel (e) hergestellt. Beide Komponenten werden dann unmittelbar vor der Applikation miteinander gemischt.

Ebenfalls ist erfindungsgemäß vorgesehen, daß die Alterungsschutzmittel ausgewählt sind aus der Gruppe bestehend aus sterisch gehinderten Phenolen, Thioethern, Mercapto-Verbindungen, Phosphorestern, Benzotriazolen, Benzophenonen, HALS und Ozonschutzmitteln.

Schließlich liegt im Rahmen der Erfindung auch die Verwendung der erfindungsgemäßen Dichtungsmasse zur Herstellung von Isolierglas für Fenster, Wintergärten, structural glazing und Dachverglasungen; für Verglasungen in Land-, Wasser- und Luftfahrzeugen sowie zur Herstellung von Solarmodulen.

Nachfolgend wird die Erfindung anhand eines Ausführungsbeispiels und eines Vergleichsbeispiels näher erläutert.

### Vergleichsbeispiel 1 (Stand der Technik)

Zusammensetzung:
a) 50 Gew.-% PIB mit MG 60 000
b) 20 Gew.-% Ruß
c) 14 Gew.-% CaCO₃
d) 15 Gew.-% Molekularsieb vom Typ A3
e) 1 Gew.-% phenolisches Antioxidans

### Erfindungsgemäßes Ausfübrungsbeispiel 2

Zusammensetzung:
a) 42 Gew.-% PIB
b) 12 Gew.-% silanmodifiziertes APAO oder PIB
c) 10 Gew.-% CaCO₃
d) 20 Gew.-% Ruß
e) 15 Gew.-% Molekularsieb vom Typ A3
f) 1 Gew.-% phenolisches Antioxidans
   Die Wirkung der erfindungsgemäßen Dichtmasse im Vergleich zum Stand der Technik läßt sich anhand der folgenden vergleichenden Prüfung nachvollziehen:
   An Isolierglas-Testscheiben mit den Abmessungen von 500 x 350 mm und dem Scheibenaufbau 4 mm Floatglas / 16 mm Scheibenzwischenraum / 4 mm Floatglas und der Randabdichtung bestehend aus
      1) einerseits der Dichtungsmasse gemäß dem Vergleichsbeispiel 1 als thermoplastischen Abstandhalter und einem handelsüblichen 2K-Silikon als Sekundär-Versiegelung
      2) andererseits der Dichtungsmasse gemäß dem erfindungsgemäßen Ausführungsbeispiel 2 als thermoplastischen Abstandhalter und dem gleichen handelsüblichen 2K-Silikon als Sekundär-Versiegelung wie bei 1)
wird an jeweils einer langen Kante mit einem hoch Silikonweichmacher-haltigen 1 k- Silikon-Dichtstoff ein handelsüblich zu Verglasungszwecken vorgesehenes "EPDM-Profil mit einem Weichmacheranteil von ca. 20 % (Mineralöl) aufgeklebt und dadurch in den direkten Kontakt zu den Dichtstoffen des Randverbunds gebracht. Die so hergestellten Test-Scheiben werden anschließend einem Klima-Wechsel-Test (-20°C / + 80°C mit 95 - 100 % rel. Luftfeuchte, 8 Stunden pro Zyklus, 3 Zyklen am Tag) ausgesetzt.

Bei Testscheibe I) erkennt man bereits nach ca. 4-5 Wochen Lagerzeit im Klima-Wechsel-Test, bedingt durch die Unverträglichkeitsreaktionen (Weichmacher-Migration aus dem EPDM-Profil und dem 1 K-Silikon-Dichtstoff durch den Randverbund) eine Verformung bzw. Wanderung des thermoplastischen Abstandhalterprofils in den Scheibenzwischenraum. Bei Testscheibe 2) wird dagegen selbst nach einer Dauer von mehr als 50 Wochen Klima-Wechsel-Test keinerlei Beeinträchtigung des Randverbundes beobachtet.

Ebenso bleibt die Glashaftung und der Randverbund nach über 4.000 Stunden Bestrahlung mit UV-Lampen (Osram Ultravitalux) und Temperaturen an den Scheibenoberflächen von bis zu 110 °C ohne jegliche erkennbare Schädigung.

Ein derart belastbarer Randverbund eignet sich deshalb nicht nur für Isolierglasanwendungen in besonders beanspruchten Objekten, z.B. die rahmenlose Verglasung in der Fassade oder dem Dach (sog. Structural Glazing), sonder z.B. auch zur Randabdichtung von Solarmodulen. Neben dem einstufigen Auftragen eines Stranges der reaktiven Butylmasse kann auch ein doppelter Auftrag des Butylstranges erfolgen, bevor das Solarmodul verpresst wird. Dies wird genau dann vorteilhaft eingesetzt, wenn durch den Randverbund die elektrischen Kontakte der im Modul befindlichen Photovoltaikzellen nach außen geführt werden. Nach Auftragen des ersten Stranges werden die Kontakte, meist in dünner Bandform nach außen geführt und der zweite Butylstrang direkt auf den ersten auf extrudiert. Dadurch werden die Kontakte in die Butylmasse eingebettet und nach dem Verpressen des Solarmoduls somit ein Wasserdampf- und gasdichte Kontaktdurchführung durch den Randverbund nach Außen sichergestellt. Da es sich in der Regel bei den Kontakten um nicht isolierte metallische Bänder handelt, darf der Randverbund keine elektrische Leitfähigkeit aufweisen, da es sonst zu elektrischen Fehlerströmen bzw. Kurzschluss zwischen den Kontakten kommen kann. Im Falle der Sekundärdichtung auf Basis Silikon stell dies kein Problem dar, da Silikone generell sehr hohe spezifische Durchgangswiderstände von in der Regel > 10¹⁴ Ohm·cm aufweisen und damit in den Bereich der elektrischen Isolatoren fallen. Bei den hoch mit Ruß gefüllten Butyldichtstoffen, wie dies bei der hier beschriebenen reaktiven Butylmasse der Fall ist, resultieren allerdings spezifische Durchgangswiderstände kleiner 10⁶ Olun·cm und die Masse wäre somit elektrisch leitfähig. Den Gehalt an Ruß zu reduzieren, führt zwar zu erhöhten spezifischen Durchgangswiderständen, aber auch zu vielen anderen Nachteilen. Neben der reich mechanischen Verstärkung und der Viskositätsregulierung hat ein hoher Anteil Ruß in einem Butyl-Dichtstoff aber auch die Aufgabe, die Mischung besonders stabil gegen hohe Temperaturen und UV-Bestrahlung zu machen, was dann bei einem wegen der elektrischen Leitfähigkeit deutlich reduziertem Rußanteil nicht mehr der Fall wäre und die Butyldichtmasse für Anwendungen im Solarmodulbereich bzw. bei höheren Temperaturen und Sonneneinstrahlung nicht mehr die notwendige Langzeitstabilität aufweisen würde. Durch den Ersatz der üblicherweise in Butyldichtstoffen verwendeten Ruße durch einen Spezialruß lassen sich aber alle erforderlichen Eigenschaften der reaktiven Butylmasse erreichen. Dabei hat sich gezeigt, dass mit der Auswahl eines nach dem Furnace-Verfahren hergestellten, oxidativ nachbehandelten Rußes mit einer Primärteilchengröße im Bereich von 50 - 60 nm ein Ruß gefunden wurde, der einerseits die zur Stabilisierung und mechanischen Verstärkung/Viskositätsregulierung notwendigen Füllgrade von bis zu 20 Gew.-Prozent innerhalb der reaktiven Butylmasse ermöglicht und gleichzeitig dabei zu einem spezifischen Durchgangswiderstand von größer 10¹⁰ Ohm·cm führt, was auch für die elektrisch isolierende Wirkung der reaktiven Butyldichtmasse völlig ausreichend ist.

Bei dem nachstehenden Ausführungsbeispiel wird ein solcher Spezialruß verwendet.

### Erfindungsgemäßes Ausführungsbeispiel 3

Zusammensetzung:
a) 40 Gew.-% PIB
b) 10 Gew.-% silanmodifiziertes APAO oder PIB
c) 20 Gew.-% CaCO3
d) 17 Gew.-% Spezialruß
e) 12 Gew.-% Molekularsieb vom Typ A3
f) 1 Gew.-% phenolisches Antioxidans.

## Patentansprüche

1. Randverbund zur Herstellung von Zwei- oder Mehrscheiben-Isolierglas oder Solarmodulen, wobei ein Primärdichtstoff und ein Sekundärdichtstoff vorgesehen sind, **dadurch gekennzeichnet, daß** der Primär-Dichtstoff ein mit speziellen reaktiven Gruppen modifiziertes Polymer enthält und insgesamt folgendermaßen aufgebaut ist:
a) 30 - 60 Gew.-%, vorzugsweise 40 bis 50 Gew.%, olefinische Polymere, Mn 400 - 600.000 D, vorzugsweise von 5.000 bis 300.000 D
b) 2 -35 Gew.-%, vorzugsweise 5-25 Gew.-%, modifiziertes Polymer
c) 5-40 Gew.-%, vorzugsweise 10 bis 30 Gew.-%, feinteilige, inerte Füllstoffe
d) 5-25 Gew.-%, vorzugsweise 10 bis 15 Gew.-%, wasserbindende Stoffe
e) 0 - 3 Gew.-% Alterungsschutzmittel, insbesondere Antioxidantien oder UV-Schutzmittel,
und der Sekundär-Dichtstoff ein Dichtstoff auf Silikon-Basis ist.

2. Dichtungsmasse gemäß Anspruch 1, **dadurch gekennzeichnet, daß** die olefinischen Polymere aus der Gruppe bestehend aus Polyisobutylen, Polybuten, Butyl-Kautschuk (Polyisobutylen-isopren), Styrol-Block-Copolymeren, insbesondere SBS, SIS, SEBS, SEPS, SIBS, SPIBS, auch in modifizierter Form und amorphe Co- und/oder Terpolymere von α-Olefinen (APAO) ausgewählt sind.

3. Dichtungsmasse gemäß Anspruch 1, **dadurch gekennzeichnet, daß** das modifizierte Polymer ausgewählt ist aus der Gruppe bestehend aus Polyisobutylen, Polybuten, Butyl-Kautschuk (Polyisobutylen-isopren), Styrol-Block-Copolymeren, insbesondere SBS, SIS, SEBS, SEPS, SIBS, SPIBS, auch in modifizierter Form und amorphe Co- und/oder Terpolymere von α-Olefinen (APAO) , wobei das Polymer modifiziert ist mit mindestens einer endständigen oder innerhalb der Kette statistisch verteilten Gruppe der Formel (1) 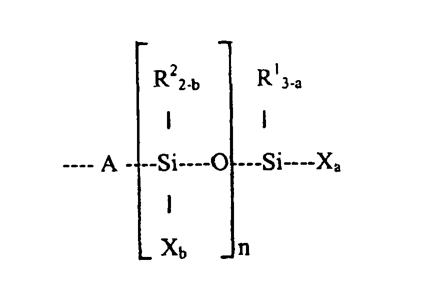 wobei - A -
- (CH₂)ₘ- (2),
- S-(CH₂)ₘ- (3) oder 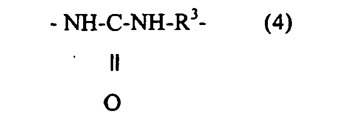
ist und R¹ und R² gleich oder verschieden sind und eine Alkylgruppe mit 1 bis 20 Kohlenstoffatomen, eine Arylgruppe mit 6 bis 20 Kohlenstoffatomen oder eine Aralkylgruppe mit 7 bis 20 Kohlenstoffatomen sind,
X eine Hydroxylgruppe oder eine hydrolisierbare Gruppe ist,
a 0,1,2 oder 3 und b 0,1 oder 2 ist, wobei die Summe von a und b größer/gleich 1 ist und n eine ganze Zahl zwischen 0 und 18 ist, m eine ganze Zahl zwischen 0 und 4 ist und R³ 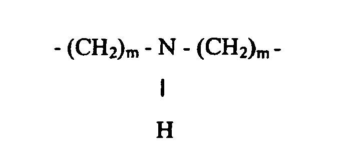 ist.

4. Dichtungsmasse gemäß Anspruch 1, **dadurch gekennzeichnet, daß** die Füllstoffe ausgewählt sind aus der Gruppe bestehend aus den gemahlenen und gefällten Kreiden, Silikaten, Siliziumoxiden und Rußen.

5. Dichtungsmasse gemäß Anspruch 4, **dadurch gekennzeichnet, daß** die Kreiden oberflächenbehandelt sind.

6. Dichtungsmasse gemäß Anspruch 1, **dadurch gekennzeichnet, daß** die Silikate ausgewählt sind aus der Gruppe bestehend aus Talkum, Kaolin, Glimmer, Siliziumoxiden, Kieselsäuren und Kalzium- oder Magnesium-Silikaten.

7. Dichtungsmasse gemäß Anspruch 1, **dadurch gekennzeichnet, daß** die wasserbindenden Stoffe ausgewählt sind aus Molekularsieben (Zeolithen) vom Typ 3A bis 10A.

8. Dichtungsmasse gemäß Anspruch 1, **dadurch gekennzeichnet, daß** die Alterungsschutzmittel ausgewählt sind aus der Gruppe bestehend aus sterisch gehinderten Phenolen, Thioethern, Mercapto-Verbindungen, Phosphorestern, Benzotriazolen, Benzophenonen, HALS und Ozonschutzmitteln.

9. Verwendung der Dichtungsmasse gemäß den Ansprüchen 1 bis 8 zur Herstellung von Isolierglas für Fenster, Wintergärten, structural glazing und Dachverglasungen; für Verglasungen in Land-, Wasser- und Luftfahrzeugen sowie zur Herstellung von Solarmodulen.
